# EUROPÄISCHE PATENTSCHRIFT

(11) **EP 3 188 131 B1**
(45) Veröffentlichungstag und Bekanntmachung des Hinweises auf die Patenterteilung: **18.04.2018**
(21) Anmeldenummer: 15202887.4
(22) Anmeldetag: 29.12.2015
(51) Int. Cl.: G06T 15/06

(54) **VERFAHREN UND VISUALISIERUNGSVORRICHTUNG ZUR VOLUMETRISCHEN VISUALISIERUNG EINES DREIDIMENSIONALEN OBJEKTS**
METHOD AND VISUALISATION DEVICE FOR VOLUMETRIC VISUALIZATION OF A THREE-DIMENSIONAL OBJECT
PROCEDE ET DISPOSITIF DE VISUALISATION DESTINE A LA VISUALISATION VOLUMETRIQUE D'UN OBJET TRIDIMENSIONNEL

(43) Veröffentlichungstag der Anmeldung: 05.07.2017
(73) Patentinhaber: Siemens Healthcare GmbH, 91052 Erlangen (DE)
(72) Erfinder: Engel, Klaus, 90491 Nürnberg (DE)

(56) Entgegenhaltungen:
- THOMAS KROES ET AL: "Exposure Render: An Interactive Photo-Realistic Volume Rendering Framework", PLOS ONE, Bd. 7, Nr. 7, 2. Juli 2012 (2012-07-02), Seite e38586, XP055188757, DOI: 10.1371/journal.pone.0038586
- John Pawasauskas: "Volume Rendering With Ray Casting", , 18. Februar 1997 (1997-02-18), Seiten 1-14, XP055190751, Gefunden im Internet: URL:http://web.cs.wpi.edu/~matt/courses/cs 563/talks/powwie/p1/ray-cast.htm [gefunden am 2015-05-21]
- Optische Modelle ET AL: "Optische Modelle, Hauptseminar "Interaktives Volumenrendering"", , 31. Dezember 2011 (2011-12-31), Seiten 1-23, XP055190803, Gefunden im Internet: URL:https://www.vis.uni-stuttgart.de/uploa ds/tx_visteaching/Optische_Modelle_-_Danie l_Klier.pdf [gefunden am 2015-05-21]

## Beschreibung

Die Erfindung betrifft das technische Gebiet des Volume-Rendering, d.h. einer Visualisierung von inhomogenen dreidimensionalen Objekten durch Bildsynthese. Derartige Objekte können insbesondere reale Körper oder virtuell modellierte Objekte sein. Die Visualisierung von dreidimensionalen Objekten hat eine Vielzahl von Anwendungsbereichen, insbesondere in der Medizin, in der Geophysik, in der Materialuntersuchung, auf dem Feld der virtuellen Realität und/oder bei Computerspielen.
Beim Volume-Rendering wird auch das innere Volumen, d.h. nicht nur eine Oberfläche eines inhomogenen Objekts, visualisiert, so dass auch Transparenzeffekte und/oder innere Strukturen auf realistische Weise wiedergegeben werden können. Das dreidimensionale Objekt wird hierbei durch Volumendaten in dreidimensionaler Auflösung repräsentiert.
Ein bekanntes Verfahren für das Volume-Rendering ist das sogenannte Ray-Casting, bei dem ein Verlauf von imaginären Strahlen, im Folgenden als Sehstrahlen bezeichnet, simuliert wird, die vom Auge eines imaginären Betrachters oder von einem imaginären Detektor ausgehen und durch das zu visualisierende Objekt verlaufen. Entlang der Sehstrahlen werden Beleuchtungswerte für Punkte innerhalb des Objekts ermittelt. Aus den für die Sehstrahlen ermittelten Beleuchtungswerten wird schließlich ein visualisiertes zweidimensionales Bild zusammengesetzt.
Eine realistische Visualisierung erfordert eine möglichst umfassende Berücksichtigung von Effekten der globalen Illumination, wie z.B. Umgebungsverdeckung, Schattenwurf, Transluzenz, sogenanntes Colour-Bleeding, Oberflächenschattierung, komplexe Kameraeffekte und/oder Beleuchtung durch beliebige Umgebungslichtverhältnisse. Derartige Beleuchtungseffekte tragen insbesondere beim Volume-Rendering wesentlich zur Tiefen- und Gestaltwahrnehmung und damit zu einem besseren Bildverständnis bei.

Zur Berechnung realistischer Schattendarstellungen werden oft synthetische Lichtquellen zur Beleuchtung eingesetzt. Derartige synthetische Lichtquellen bieten zwar häufig eine gute Schattendarstellung, verleihen dem synthetisierten Bild jedoch in der Regel ein synthetisches, unnatürliches Aussehen, während andere Beleuchtungsverfahren bei natürlich aussehenden Bildern nur unscharfe Schatten synthetisieren können.

Aus der Druckschrift "Exposure Render: An Interactive Photo-Realistic Volume Rendering Framework" von Thomas Kroes et al., PLoS ONE, Volume 7, Issue 7, vom Juli 2012 ist ein Volume-Rendering-Verfahren bekannt, das zur Verfolgung von Sehstrahlen eine Monte-Carlo-Simulation verwendet. Zur Berechnung realistischer Schattierungseffekte sind jedoch zusätzlich zu einem jeweiligen Sehstrahl weitere Strahlen innerhalb des Objektvolumens zu verfolgen, was einen erheblichen Rechenaufwand bedingt. Darüber hinaus ist ein sog. Importance-Sampling erforderlich, was die statistischen Eigenschaften des Monte-Carlo-Verfahrens beeinflusst.

Es ist Aufgabe der vorliegenden Erfindung, ein Verfahren, eine Visualisierungsvorrichtung, ein Computerprogrammprodukt sowie ein computerlesbares Speichermedium zur volumetrischen Visualisierung eines dreidimensionalen Objekts anzugeben, die eine effiziente Einbeziehung globaler Illuminationseffekte, insbesondere mit realistischer Schattendarstellung erlauben.

Gelöst wird diese Aufgabe durch ein Verfahren mit den Merkmalen des Patentanspruches 1, durch eine Visualisierungsvorrichtung mit den Merkmalen des Patentanspruches 13, durch ein Computerprogrammprodukt mit den Merkmalen des Patentanspruches 14 sowie durch ein computerlesbares Speichermedium mit den Merkmalen des Patentanspruches 15.

Erfindungsgemäß wird zur volumetrischen Visualisierung eines dreidimensionalen Objekts innerhalb eines Umgebungsbildes als Beleuchtungsquelle das Umgebungsbild nach intensiven Lichtquellen durchsucht, und es wird mindestens eine intensive Lichtquelle des Umgebungsbildes abhängig von ihrer Intensität selektiert. Weiterhin wird für ein jeweiliges Visualisierungspixel eine Vielzahl von Sehstrahlen simuliert. Visualisierungspixel können hierbei virtuell auf einer Abbildungsebene oder auf einer gekrümmten Abbildungsfläche angeordnet sein. Erfindungsgemäß werden für einen jeweiligen Sehstrahl, der in ein Objektvolumen eindringt, i) eine Streuposition bestimmt, ii) eine Streurichtung ausgewählt, wobei abhängig von einem ersten Zufallsprozess entschieden wird, ob der Sehstrahl in Richtung der mindestens einen selektierten intensiven Lichtquelle oder in eine abhängig von einem zweiten Zufallsprozess auszuwählenden Streurichtung gestreut wird, und iii) der Sehstrahl an der Streuposition in die ausgewählte Streurichtung gestreut. Der erste und/oder der zweite Zufallsprozess kann hierbei z.B. auf einem Pseudo- oder Quasizufallszahlengenerator basieren. Die Streuung kann insbesondere eine virtuelle Streuung sein. Die Schritte i) bis iii) werden wiederholt, bis der Sehstrahl im Objektvolumen absorbiert wird oder aus dem Objektvolumen austritt und auf das Umgebungsbild trifft, wobei abhängig von einem Intensitätswert des Umgebungsbilds ein Beleuchtungsbeitrag des Sehstrahls zum jeweiligen Visualisierungspixel ermittelt wird. Ein Intensitätswert für das jeweilige Visualisierungspixel wird ermittelt, indem über die Beleuchtungsbeiträge der Vielzahl von Sehstrahlen gemittelt wird. Die obigen Intensitäten bzw. Intensitätswerte können insbesondere eine Helligkeit und/oder eine Farbintensität betreffen.

Eine Visualisierungsvorrichtung dient zur Ausführung des erfindungsgemäßen Verfahrens.

Die Erfindung erlaubt es, komplexe globale Illuminationseffekte auf effiziente Weise zu berücksichtigen. Aufgrund der Streuung von Sehstrahlen in eine zufallsabhängig ausgewählte Streurichtung bis zur Absorption oder dem Auftreffen auf das Umgebungsbild können aufwändig zu berechnende kaskadierte Verzweigungen von Sehstrahlen vermieden werden und trotzdem komplexe Lichtwege innerhalb des Objektvolumens berücksichtigt werden. Insofern das Umgebungsbild das Objektvolumen ganz oder teilweise umgibt, kann zumindest für einen erheblichen Anteil der austretenden Sehstrahlen erwartet werden, dass sie auf einen Bildpunkt des Umgebungsbildes treffen und so einen Beleuchtungsbeitrag erhalten. Auf diese Weise kann vermieden werden, dass ein großer Anteil der Sehstrahlen gewissermaßen verschwendet wird, d.h. verfolgt wird, ohne einen Beleuchtungsbeitrag zu liefern.

Durch die zufallsgesteuerte Kombination einer Streuung in Richtung einer intensiven Lichtquelle und einer Streuung in beliebige Richtungen des Umgebungsbildes können Vorteile unterschiedlicher Beleuchtungsmodelle kombiniert werden. Insbesondere erlaubt einerseits eine Verwendung eines Umgebungsbildes eine sehr natürlich wirkende Visualisierung und andererseits ein Forcieren der Streuung in Richtung einer intensiven Lichtquelle eine sehr realistische Schattendarstellung.

Vorteilhafte Ausführungsformen und Weiterbildungen der Erfindung sind in den abhängigen Ansprüchen angegeben.

Nach einer vorteilhaften Ausführungsform der Erfindung kann ein eine Schattenstärke betreffender Visualisierungsparameter eingelesen werden und der erste Zufallsprozess abhängig vom eingelesenen Visualisierungsparameter ausgeführt werden. Beispielsweise kann zur Steigerung der Schattenstärke eine Wahrscheinlichkeit erhöht werden, mit der ein jeweiliger Sehstrahl in Richtung der mindestens einen selektierten intensiven Lichtquelle gestreut wird. Auf diese Weise kann die Stärke der Schattendarstellung z.B. interaktiv durch einen Benutzer auf einfache Weise variiert werden.

Weiterhin kann der erste Zufallsprozess abhängig von der Intensität der mindestens einen selektierten intensiven Lichtquelle ausgeführt werden. So kann eine Wahrscheinlichkeit, mit der ein jeweiliger Sehstrahl in Richtung der mindestens einen selektierten intensiven Lichtquelle gestreut wird, mit deren Intensität erhöht werden. Dabei können z.B. deren absolute Intensität und/oder deren relative Intensität gegenüber einer mittleren Intensität des Umgebungsbildes oder gegenüber einer Intensität einer anderen Lichtquelle des Umgebungsbildes berücksichtigt werden.

Falls mehrere selektierte intensive Lichtquellen vorhanden sind, kann die Auswahl der Streurichtung abhängig von der jeweiligen Intensität der selektierten intensiven Lichtquellen erfolgen. Dabei kann eine Wahrscheinlichkeit, mit der ein jeweiliger Sehstrahl in Richtung einer der selektierten intensiven Lichtquellen gestreut wird, mit deren Intensität erhöht werden. Auch hierbei kann eine absolute Intensität und/oder eine relative Intensität gegenüber einer mittleren Intensität des Umgebungsbildes oder gegenüber einer Intensität einer anderen Lichtquelle des Umgebungsbildes berücksichtigt werden.

Vorteilhafterweise kann eine Liste von intensiven Lichtquellen des Umgebungsbildes erstellt werden. Dabei kann für eine jeweilige intensive Lichtquelle eine Richtung zu dieser intensiven Lichtquelle, ein dieser intensiven Lichtquelle zugeordneter Polygonzug auf dem Umgebungsbild und/oder ein Intensitätswert gespeichert werden. Eine solche Liste erlaubt einen schnellen Zugriff auf für die Streuung und für den Beleuchtungsbeitrag relevante Parameter.

Weiterhin kann ein Auftreffpunkt des austretenden Sehstrahls auf das Umgebungsbild ermittelt werden. Der Beleuchtungsbeitrag des Sehstrahls kann dann abhängig von einem Intensitätswert am Auftreffpunkt des Umgebungsbildes ermittelt werden.

Ferner kann der Beleuchtungsbeitrag des Sehstrahls beim Austritt aus dem Objektvolumen in Richtung der mindestens einen selektierten intensiven Lichtquelle abhängig von deren Intensität ermittelt werden. Insbesondere kann dabei ein in der Liste gespeicherter Intensitätswert verwendet werden. Eine Ermittlung eines konkreten Auftreffpunktes des Sehstrahls auf dem Umgebungsbild ist dann häufig nicht mehr notwendig.

Nach einer vorteilhaften Ausführungsform der Erfindung können mehrere das Objektvolumen umgebende Umgebungsbilder als Beleuchtungsquellen vorgesehen sein. Einem jeweiligen Sehstrahl kann ein Streutyp zugeordnet sein, und abhängig vom Streutyp des austretenden Sehstrahls kann eines der Umgebungsbilder selektiert werden. Der Beleuchtungsbeitrag des Sehstrahls kann dann spezifisch anhand des selektierten Umgebungsbildes ermittelt werden. Der Streutyp kann insbesondere reflexiv, refraktiv oder transmissiv sein. Daneben kann noch ein Streutyp "ungestreut" für nicht gestreute Sehstrahlen vorgesehen sein. Ein reflexiver und/oder refraktiver Streutyp kann vorzugsweise einer stark anisotropen Streuung entsprechend einer höchstens leicht diffusen Spiegelung bzw. Brechung an einer Oberfläche zugeordnet werden, während ein transmissiver Streutyp einer Streuung mit demgegenüber geringer Anisotropie zugeordnet werden kann. Vorzugsweise kann bei einem reflexiven oder refraktiven Streutyp ein höchstens leicht unscharfes Umgebungsbild und bei einem transmissiven Streutyp ein demgegenüber stark verwaschenes Umgebungsbild ausgewählt werden.

Insbesondere kann aus einem ersten der Umgebungsbilder mindestens ein zweites der Umgebungsbilder durch eine für einen Streutyp spezifische Filterung erzeugt werden. So kann ein erstes, ungefiltertes Umgebungsbild für ungestreute Sehstrahlen, ein daraus mittels eines Unschärfefilters leicht verwischtes, zweites Umgebungsbild für einen reflexiven oder refraktiven Streutyp sowie ein demgegenüber stark verwischtes oder diffuses Umgebungsbild für einen transmissivem Streutyp erzeugt werden. Auf diese Weise können spezifische Eigenschaften von Streuungen, wie insbesondere deren Anisotropie, effektiv durch entsprechend gefilterte Umgebungsbilder nachgebildet oder implementiert werden.

Weiterhin kann das Objekt durch Volumendaten repräsentiert werden, die eine Dichte des Objekts im Objektvolumen angeben. Die Streuposition kann dann abhängig von der Dichte entlang des jeweiligen Sehstrahls bestimmt werden, und der Beleuchtungsbeitrag des jeweiligen Sehstrahls kann durch die Dichte an der Streuposition beeinflusst werden. Die Dichte kann hierbei insbesondere eine physikalische Dichte, eine optische Dichte, ein Brechungsindex und/oder ein Helligkeits-, Farb-, Transparenz- und/oder Opazitätswert sein und in skalarer, vektorieller oder tensorieller Form gegeben sein.

Vorzugsweise kann eine Transferfunktion vorgesehen sein, die einen jeweiligen Wert der Dichte auf einen Helligkeits-, Farb-, Transparenz- und/oder Opazitätswert abbildet. Auf diese Weise können innere Strukturen des Objekts, die durch unterschiedliche Dichte oder einen charakteristischen Dichteverlauf gekennzeichnet sind, in vorgebbarer Weise durch Farben, Helligkeit, Transparenz und/oder Opazität visualisiert werden. Insbesondere kann ein vor der Streuung vorliegender Farbwert des Beleuchtungsbeitrags des Sehstrahls mit einem der Dichte zugeordneten Farbwert verknüpft, z.B. multipliziert werden und der resultierende Farbwert in den Beleuchtungsbeitrag des Sehstrahls eingesetzt werden.

Gemäß einer weiteren Ausführungsform kann eine Anzahl der erfolgten Streuungen des Sehstrahls ermittelt, z.B. gezählt werden und die Absorption des Sehstrahls im Objektvolumen abhängig von dieser Anzahl erfolgen. Insbesondere kann für die Streuungen eine Maximalanzahl vorgegeben sein, nach deren Überschreitung der Sehstrahl als absorbiert gilt.

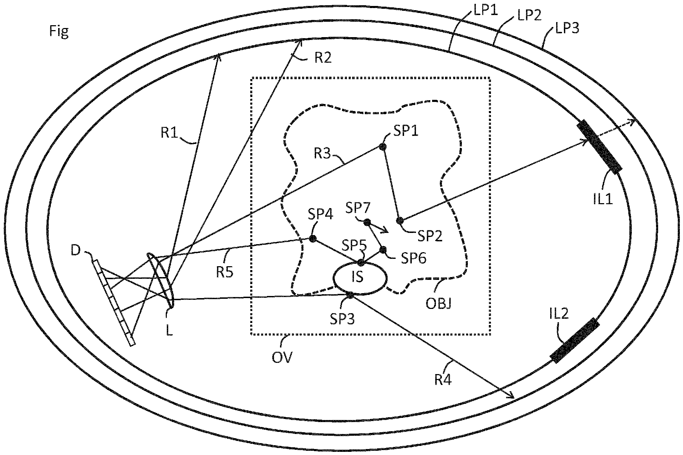

Ein Ausführungsbeispiel der Erfindung wird nachfolgend anhand der Zeichnung näher erläutert.

Dabei zeigt die Figur einen simulierten Strahlenverlauf zur Visualisierung eines von mehreren Umgebungsbildern umgebenen Objekts in schematischer Darstellung.

Die Figur veranschaulicht eine Visualisierung eines inhomogenen dreidimensionalen Objekts OBJ. Dieses kann z.B. ein anhand von Tomographiedaten virtuell modelliertes Körperteil oder ein synthetisches Objekt einer virtuellen Realität sein. Die Visualisierung erfolgt durch Bildsynthese. Die in der Figur veranschaulichten Strukturen werden vorzugsweise als virtuelle Strukturen durch einen Computer simuliert. Ein wesentlicher Teil der hierfür erforderlichen Berechnungen kann vorzugsweise auf eine Graphikkarte ausgelagert und dort in massiv paralleler Weise durchgeführt werden.

Das Objekt OBJ ist in einem dreidimensionalen Objektvolumen OV enthalten, das in der Figur durch ein punktiertes Rechteck angedeutet ist. Das Objekt OBJ wird innerhalb des Objektvolumens OV durch Volumendaten repräsentiert, die eine Dichte des zu visualisierenden Objekts OBJ in dreidimensionaler bzw. räumlicher Auflösung angeben. Die Dichte kann hierbei insbesondere eine physikalische Dichte, eine optische Dichte, einen Brechungsindex und/oder eine Helligkeit, Farbe, Transparenz, Intensität und/oder Opazität des Objekts OBJ in dreidimensionaler Auflösung angeben.

Ein virtueller Detektor D dient als Abbildungsebene, auf die das visualisierte Objekt OBJ virtuell projiziert wird. Der Detektor D umfasst eine Vielzahl von virtuell flächenhaft angeordneten Visualisierungspixeln. Vor dem Detektor D ist eine virtuelle Linse L angeordnet, die zusammen mit dem Detektor D eine virtuelle Kamera bildet. Durch die Anordnung von Detektor D und Linse L können optische Abbildungseffekte wie Tiefen- und/oder Bewegungsunschärfe simuliert werden.

Das Objekt OBJ weist als beispielhafte innere Struktur eine implizite Oberfläche IS auf. Als implizite Oberflächen können innere oder äußere Bereiche des Objekts OBJ aufgefasst oder identifiziert werden, bei denen ein Dichteverlauf gewissermaßen einen Sprung aufweist, d.h. bei denen ein Betrag eines Gradienten der Dichte lokal sehr groß wird. Dies ist z.B. beim Übergang von Muskelgewebe zu Knochengewebe der Fall. Der entsprechende Übergang kann dann als Knochenoberfläche identifiziert werden. Einer auf diese Weise identifizierten Oberfläche, hier IS, können vorzugsweise reflektierende Eigenschaften zugeordnet werden.

Als virtuelle Beleuchtungsquellen sind mehrere das Objektvolumen OV umgebende Umgebungsbilder LP1, LP2 und LP3 vorgesehen. Mittels derartiger Umgebungsbilder kann das Objekt so visualisiert werden, als ob es sich in einer durch die Umgebungsbilder abgebildeten Umgebung befände und der hiervon induzierten Beleuchtung in realistischer Weise ausgesetzt wäre. Derartige Umgebungsbilder werden häufig auch als "Light Probe" oder "Light Map" bezeichnet und können insbesondere Lichtquellen unterschiedlicher Intensität enthalten. Eine Intensität kann hier und im Folgenden insbesondere eine Helligkeit oder eine Farbintensität betreffen. Vorzugsweise umgeben die Umgebungsbilder LP1, LP2 und LP3 das Objektvolumen OV möglichst vollständig, so dass möglichst jeder aus dem Objektvolumen OV austretende Sehstrahl auf eines der Umgebungsbilder LP1, LP2 oder LP3 trifft. Die Umgebungsbilder LP1, LP2 oder LP3 sind jeweils so angeordnet bzw. projiziert, dass sie diejenige Sicht abbilden, die ein im Objektvolumen OV befindlicher Betrachter von der abgebildeten Umgebung haben würde.

Für das vorliegende Ausführungsbeispiel sei angenommen, dass das Umgebungsbild LP1 ein ungefiltertes Umgebungsbild, z.B. ein Rundumbild eines Straßenzuges ist. Das Umgebungsbild LP2 sei ein reflexives Umgebungsbild, das durch Anwendung eines leichten Unschärfefilters aus dem Umgebungsbild LP1 erzeugt wurde. Das Umgebungsbild LP2 sei also eine leicht verwischte Version des Umgebungsbildes LP1. Schließlich sei das Umgebungsbild LP3 ein diffuses Umgebungsbild, das durch Anwendung eines starken Unschärfefilters aus dem Umgebungsbild LP1 erzeugt wurde. Das Umgebungsbild LP3 sei also eine stark verwischte oder fast diffuse Version des Umgebungsbildes LP1. Ein solches nahezu diffuses Umgebungsbild LP3 wird häufig auch als "Irradiance Light Map" bezeichnet.

Die Erfindung erlaubt es, auf einfache und flexible Weise eine Schattendarstellung bei der Visualisierung des Objektes OBJ zu beeinflussen. Zu diesem Zweck wird vor der Berechnung der Visualisierung ein Visualisierungsparameter, der eine Stärke oder Ausprägung einer Schattendarstellung betrifft, eingelesen und/oder über eine Benutzerschnittstelle von einem Benutzer abgefragt. Dies kann z.B. ein Zahlenwert zwischen 0 und 1 bzw. zwischen 0% und 100 % sein.

Erfindungsgemäß wird das ungefilterte Umgebungsbild LP1 nach intensiven Lichtquellen durchsucht. Im vorliegenden Ausführungsbeispiel werden hierbei zwei intensive Lichtquellen IL1 und IL2 im Umgebungsbild LP1 detektiert und deren Intensität ermittelt. Als Detektionskriterium kann hierbei z.B. ein Überschreiten eines vorgegebenen Schwellwertes für eine absolute Intensität einer Lichtquelle und/oder für eine relative Intensität gegenüber einer z.B. mittleren Intensität des Umgebungsbildes LP1 dienen. Alternativ oder zusätzlich kann eine Liste der intensivsten Lichtquellen im Umgebungsbild LP1 erstellt werden und/oder Lichtquellen im Umgebungsbild LP1 nach ihrer Intensität sortiert werden und eine vorgegebene Anzahl der intensivsten dieser Lichtquellen selektiert werden. Vorzugsweise werden in der Liste der intensivsten Lichtquellen des Umgebungsbildes zu jeder dieser Lichtquellen deren jeweiliger Intensitätswert, sowie eine Richtung zu dieser Lichtquelle aus Sicht des Objektvolumens und/oder ein dieser Lichtquelle zugeordneter Polygonzug auf dem Umgebungsbild gespeichert. Die ermittelten intensiven Lichtquellen IL1 und IL2 sind in der Figur durch verdickte Balken veranschaulicht.

Zur Erzeugung eines einem Benutzer zu präsentierenden Bildes des zu visualisierenden Objekts OBJ wird für einen jeweiligen Visualisierungspixel des Detektors D eine Vielzahl von Sehstrahlen simuliert, d.h. berechnet, die von dem jeweiligen Visualisierungspixel ausgehen. Für das vorliegende Ausführungsbeispiel sind in der Figur beispielhafte Sehstrahlen R1, ..., R5 angedeutet. Ein von einem jeweiligen Visualisierungspixel des Detektors D ausgehender Sehstrahl R1, ..., R5 wird vorzugsweise auf eine zufällig ausgewählte Position auf der virtuellen Linse L gerichtet und an der ausgewählten Position gemäß einer Brechkraft der Linse L nach dem physikalischen Brechungsgesetzt gebrochen. Der gebrochene Sehstrahl R1, ..., R5 wird dann weiterverfolgt.

Jedem von einem Visualisierungspixel ausgehenden Sehstrahl wird ein Beleuchtungsbeitrag zugeordnet, der vorzugsweise einen Farbwert enthält. Der Farbwert wird anfänglich mit der Farbe Weiß initialisiert. Für die von der Linse L gebrochenen Sehstrahlen wird jeweils ermittelt, ob sie in das Objektvolumen OV eindringen oder nicht. Im vorliegenden Ausführungsbeispiel dringt der Sehstrahl R1 nicht in das Objektvolumen OV ein, während die anderen Sehstrahlen R2, ..., R5 in das Objektvolumen OV eindringen. Für die in das Objektvolumen OV eindringenden Sehstrahlen R2, ..., R5 wird jeweils eine Streuposition SP1, ... bzw. SP7 innerhalb des Objektvolumens OV mittels sogenanntem Woodcock-Tracking ermittelt. Beim Woodcock-Tracking steigt eine Streuwahrscheinlichkeit abhängig von der Dichte des Objekts OBJ entlang des jeweiligen Sehstrahls mit der Länge des im Objektvolumen OV zurückgelegten Weges. An der ermittelten Streuposition wird eine Streuung des jeweiligen Sehstrahls simuliert. Die Streuung ändert die Richtung des Sehstrahls, was in der Figur durch mit Punkten gekennzeichnete Knicke an der jeweiligen Streuposition SP1, ... bzw. SP7 angedeutet ist. Insbesondere wird ein jeweiliger Sehstrahl R2, ..., R5 unverzweigt gestreut. Auf diese Weise können aufwendig zu berechnende kaskadierte Verzweigungen von Sehstrahlen oder verzweigte Bäume von Sehstrahlen vermieden werden.

Die Streurichtung, in die ein jeweiliger Sehstrahl an einer jeweiligen Streuposition gestreut wird, wird im vorliegenden Ausführungsbeispiel mittels zweier Zufallsprozesse ausgewählt. Die Zufallsprozesse können hierbei insbesondere durch Pseudo- oder Quasizufallszahlengeneratoren realisiert werden. Bei der Auswahl der Streurichtung wird zunächst anhand eines ersten Zufallsprozesses entschieden, ob der betreffende Sehstrahl in Richtung der selektierten intensiven Lichtquellen IL1 und IL2 gestreut wird, d.h. ob die Streurichtung auf Richtungen zu den intensiven Lichtquellen IL1 bzw. IL2 beschränkt wird, oder ob eine solche Beschränkung nicht erfolgt. Der erste Zufallsprozess wird dabei abhängig vom eingelesenen Visualisierungsparameter ausgeführt. Der Visualisierungsparameter kann hierbei eine Wahrscheinlichkeit vorgeben, mit der die Streurichtung auf Richtungen zu den intensiven Lichtquellen IL1 und IL2 beschränkt wird. So kann durch den ersten Zufallsprozess eine Zufallszahl zwischen 0 und 1 erzeugt und mit dem Visualisierungsparameter verglichen werden. Wenn die Zufallszahl kleiner als der Visualisierungsparameter ist, wird die Streurichtung auf Richtungen zu den intensiven Lichtquellen IL1 und IL2 beschränkt, während im anderen Fall eine solche Beschränkung nicht erfolgt.

Falls die Streurichtung auf Richtungen zu den intensiven Lichtquellen IL1 und IL2 beschränkt wird, können durch einen weiteren Zufallsprozess eine der intensiven Lichtquellen sowie eine Zufallsposition auf dieser intensiven Lichtquelle ausgewählt werden. Die Streuung erfolgt dann in Richtung dieser Zufallsposition. Alternativ oder zusätzlich kann die Beschränkung der Streurichtung auf die intensiven Lichtquellen IL1 und IL2 auch abhängig von deren relativer Intensität zueinander oder gegenüber einer mittleren Intensität des Umgebungsbildes LP1 erfolgen. So kann bei Detektion einer besonders intensiven Lichtquelle im Umgebungsbild LP1 eine Streuung in Richtung dieser besonders intensiven Lichtquelle forciert werden.

Falls die Streuung des jeweiligen Sehstrahls nicht auf Richtungen zu den intensiven Lichtquellen IL1 und IL2 beschränkt wird, wird die Streurichtung mittels eines zweiten Zufallsprozesses ausgewählt. Die Streuung kann hierbei in beliebiger Richtung zugelassen werden. Dabei können die Streurichtungen statistisch gleich verteilt werden oder abhängig von einer Wahrscheinlichkeitsdichtefunktion ermittelt werden. Eine solche Wahrscheinlichkeitsdichtefunktion wird häufig auch als Phasenfunktion oder als PDF bezeichnet. Sie gibt für eine jeweilige Streuposition an, mit welcher Wahrscheinlichkeit der jeweilige Sehstrahl in eine jeweilige Streurichtung gestreut wird. Die Phasenfunktion kann aus lokalen Materialeigenschaften des Objekts OBJ abgeleitet werden, z.B. anhand einer aus Tomographiedaten abgeleiteten lokalen Röntgenabschwächung oder -Absorption gemäß der sogenannten Hounsfield-Skala. Die lokalen Materialeigenschaften werden vorzugsweise als Komponente der Dichte in den Volumendaten des Objekts OBJ codiert. Vorzugsweise werden die Volumendaten derart codiert, dass die Dichte und die daraus abgeleiteten Daten an jeder Position des Objektvolumens OV und insbesondere entlang der Sehstrahlen und ihrer Streupositionen effizient interpoliert werden können. Im vorliegenden Ausführungsbeispiel wird für den Fall einer nicht auf die intensiven Lichtquellen IL1 und IL2 beschränkten Streuung die Streurichtung abhängig vom zweiten Zufallsprozess und abhängig von der Phasenfunktion ausgewählt. Der jeweilige Sehstrahl wird dann an der Streuposition in die ausgewählte Streurichtung gestreut.

Eine lokale Farbe oder Intensität an der Streuposition kann durch Anwendung einer Transferfunktion auf die vorzugsweise interpolierte Dichte oder deren Komponenten abgeleitet werden. Die Transferfunktion kann beispielsweise höheren Dichten eine dunklere, gesättigtere und/oder andere Farbe zuordnen als geringeren Dichten. Die an der Streuposition vorliegende Farbe wird mit der dem jeweiligen Sehstrahl zugeordneten Farbe kombiniert, z.B. multipliziert, um eine Wechselwirkung zwischen Licht und dem Objekt OBJ an der Streuposition zu modellieren.

Der in die ausgewählte Streurichtung gestreute Sehstrahl R3, ..., R5 wird mittels Woodcock-Tracking weiterverfolgt, um so die nächste Streuposition zu bestimmen, wo die gleichen Verfahrensschritte wie bei der vorhergehenden Streuposition ausgeführt werden. Dieser Prozess wird wiederholt, bis der jeweilige Sehstrahl im Objektvolumen OV absorbiert wird oder das Objektvolumen OV verlässt und auf eines der Umgebungsbilder LP1, LP2 oder LP3 trifft. Die Absorption kann dabei modelliert werden, indem eine maximale Anzahl an Streuereignissen vorgegeben wird, bei deren Überschreitung der jeweilige Sehstrahl als absorbiert gilt oder indem eine Wahrscheinlichkeitsdichtefunktion für die Extinktion eines jeweiligen Sehstrahls basierend auf der Anzahl der Streuereignisse benutzt wird. Eine derartige Kombination von Woodcock-Tracking mit zufallsbasierter Streuung wird häufig auch als Monte-Carlo-Rendering bezeichnet.

Wenn ein Sehstrahl auf ein Umgebungsbild LP1, LP2 und/oder LP3 trifft, wird abhängig von einem Intensitätswert dieses Umgebungsbilds am Auftreffpunkt des Sehstrahls auf dieses Umgebungsbild ein Beleuchtungsbeitrag dieses Sehstrahls zum jeweiligen Visualisierungspixel ermittelt. Welches der Umgebungsbilder LP1, LP2 und LP3 zur Ermittlung des Beleuchtungsbeitrags des jeweiligen Sehstrahls herangezogen wird, wird anhand eines Streutyps dieses Sehstrahls ermittelt.

Im vorliegenden Ausführungsbeispiel wird mittels des ungefilterten Umgebungsbildes LP1 der Beleuchtungsbeitrag eines ungestreuten Sehstrahls ermittelt. Entsprechend wird anhand des reflexiven Umgebungsbildes LP2 der Beleuchtungsbeitrag eines nur reflektierten Sehstrahls und anhand des diffusen Umgebungsbildes LP3 der Beleuchtungsbeitrag eines transmissiv gestreuten Sehstrahls ermittelt. Falls ein Sehstrahl das Objektvolumen OV in Richtung einer der intensiven Lichtquellen IL1 oder IL2 verlässt, kann der Beleuchtungsbeitrag dieses Sehstrahls alternativ oder zusätzlich auch abhängig von der in der Liste der intensiven Lichtquellen gespeicherten Intensität dieser intensiven Lichtquelle ermittelt werden.

Über die Vielzahl von verfolgten Sehstrahlen wird visualisierungspixelweise statistisch gemittelt. Während im Lauf der Visualisierung weitere Sehstrahlen berechnet werden, verbessert sich eine Qualität des generierten Bildes sukzessive, d.h. ein statistisch bedingtes Bildrauschen verringert sich im Laufe der Simulation.

Im vorliegenden Ausführungsbeispiel trifft der die Linse L verlassende Sehstrahl R1 nicht auf das Objektvolumen OV, sondern trifft als ungestreuter Sehstrahl auf das ungefilterte Umgebungsbild LP1. Dies gilt auch für den Sehstrahl R2, der zwar das Objektvolumen OV durchdringt, aber dort nicht gestreut wird und somit ebenfalls seinen Beleuchtungsbeitrag abhängig von der Intensität des Umgebungsbildes LP1 am Auftreffpunkt erhält.

Der Sehstrahl R3 wird im Objektvolumen OV zunächst an der Streuposition SP1 transmissiv gestreut. Dabei wird zunächst anhand des ersten Zufallsprozesses entschieden, dass die Streurichtung nicht auf die intensiven Lichtquellen IL1 und IL2 beschränkt wird, sondern mittels des zweiten Zufallsprozesses aus allen umgebenden Richtungen ausgewählt wird. Anschließend wird der Sehstrahl R3 an der Streuposition SP2 nochmals transmissiv gestreut, wobei anhand des ersten Zufallsprozesses entschieden wird, dass die Auswahlstreurichtung auf die intensiven Lichtquellen IL1 und IL2 beschränkt wird. Nach der Beschränkung auf die intensiven Lichtquellen IL1 und IL2 wird abhängig von einem weiteren Zufallsprozess zunächst die erste intensive Lichtquelle IL1 und weiterhin ein zufallsbasierter Auftreffpunkt des Sehstrahls R3 auf der intensiven Lichtquelle IL1 ausgewählt. Die Auswahl kann hierbei vorzugsweise abhängig von der gespeicherten Intensität der intensiven Lichtquellen IL1 und IL2 erfolgen. Insofern der Sehstrahl R3 nach der zweiten Streuung das Objektvolumen OV in Richtung der intensiven Lichtquellen IL1 verlässt, kann diesem Sehstrahl R3 als Beleuchtungsbeitrag die Intensität der intensiven Lichtquelle IL1 am Auftreffpunkt des Sehstrahls R3 auf das Umgebungsbild LP1 zugeordnet werden. Aufgrund der transmissiven Streuungen an den Streupositionen SP1 und SP2 wird dem Sehstrahl R3 ein transmissiver Streutyp zugeordnet. Aufgrund des transmissiven Streutyps kann alternativ oder zusätzlich zum Beleuchtungsbeitrag der intensiven Lichtquelle IL1 auch das diffuse Umgebungsbild LP3 ausgewählt werden, um den Beleuchtungsbeitrag des Sehstrahls R3 abhängig vom Intensitätswert des Umgebungsbildes LP3 am Auftreffpunkt des Sehstrahls R3 zu ermitteln. Eine solche Auswahl des diffusen Umgebungsbildes LP3 ist in der Figur durch eine gestrichelte Fortsetzung des Sehstrahls R3 angedeutet.

Der Sehstrahl R4 wird innerhalb des Objektvolumens OV nur einmal und zwar reflexiv an der impliziten Oberfläche IS gestreut, bevor er das Objektvolumen OV verlässt. Aufgrund der reflexiven Streuung wird dem Sehstrahl R4 ein reflexiver Streutyp zugeordnet und sein Beleuchtungsbeitrag anhand des reflexiven Umgebungsbildes LP2, d.h. anhand eines Intensitätswerts des Umgebungsbildes LP2 am Auftreffpunkt des Sehstrahls R4 ermittelt.

Für die auf die Umgebungsbilder bzw. die intensiven Lichtquellen IL1 und IL2 treffenden Sehstrahlen, hier R1, ..., R4 wird ein jeweiliger Beleuchtungsbeitrag mit der dem jeweiligen Sehstrahl zugeordneten Farbe kombiniert, z.B. multipliziert, und zum jeweils zugeordneten Visualisierungspixel addiert.

Der Sehstrahl R5 wird im Inneren des Objekts OBJ an Streupositionen SP4, ..., SP7 gestreut und danach innerhalb des Objekts OBJ, z.B. aufgrund einer hohen lokalen Dichte in der Nähe der letzten Streuposition SP7, absorbiert. Insofern der Sehstrahl R5 nach allen Streuereignissen innerhalb des Objektvolumen OV verbleibt, erhält dieser Sehstrahl R5 keinen Beleuchtungsbeitrag.

Der Sehstrahl R5 wird zunächst an der Streuposition SP4 transmissiv gestreut, wobei anhand des ersten Zufallsprozesses entschieden wird, dass die Streurichtung auf die intensiven Lichtquellen IL1 und IL2 beschränkt wird. Anschließend wird abhängig von einem weiteren Zufallsprozess eine auf die intensive Lichtquelle IL2 zeigende Richtung ausgewählt. Bei der Weiterverfolgung des Sehstrahls R5 in diese ausgewählte Streurichtung trifft der Sehstrahl R5 auf die implizite Oberfläche IS und wird dort an der Streuposition SP5 reflexiv gestreut. Bei dieser reflexiven Streuung werden Streurichtungen entlang einer Reflexionsrichtung gemäß dem physikalischen Reflexionsgesetz in hohem Maße gegenüber anderen Streurichtungen bevorzugt. Der reflexiv gestreute Sehstrahl R5 ist somit gewissermaßen probabilistisch in die durch das Reflexionsgesetz vorgegebene Reflexionsrichtung fokussiert. Bei der Weiterverfolgung des so gestreuten Sehstrahls R5 wird die weitere Streuposition SP6 ermittelt, an der anhand des ersten Zufallsprozesses entschieden wird, die verfügbaren Streurichtungen nicht auf die intensiven Lichtquellen IL1 und IL2 einzuschränken. Infolgedessen wird eine Streurichtung aus allen umgebenden Richtungen abhängig von einem weiteren Zufallsprozess ausgewählt und der Sehstrahl R5 in diese Richtung gestreut. Im Anschluss daran wird die weitere Streuposition SP7 ermittelt und anhand des ersten Zufallsprozesses entschieden, dass die Streuung in Richtung der intensiven Lichtquelle IL1 und IL2 beschränkt wird. Nach der Streuung in diese Richtung wird der Sehstrahl R5, wie bereits oben erwähnt, im Objekt OBJ absorbiert.

Aufgrund der Streuung des Sehstrahls R5 an der Streuposition SP4 in Richtung der intensiven Lichtquelle IL2, die gewissermaßen aus Sicht des Sehstrahls R5 hinter der impliziten Oberfläche IS liegt, trifft der Sehstrahl R5 auf diese implizite Oberfläche IS und wird von dieser reflektiert, was letztlich zur Absorption dieses Sehstrahls R5 führt. Hieraus ist ersichtlich, dass gewissermaßen alle aus Sicht der intensiven Lichtquelle IL1 hinter der impliziten Oberfläche IS befindlichen Streupositionen - zumindest bei einer Streuentscheidung in Richtung dieser intensiven Lichtquelle IL2 - von der impliziten Oberfläche IS abgeschattet werden. Auf diese Weise kann eine realistische Darstellung von Schatten erreicht werden, die von den intensiven Lichtquellen IL1 oder IL2 an Hindernissen im Objekt OBJ geworfen werden.

Die Visualisierungspixel des Detektors D bilden einen Visualisierungsbildpuffer, der die statistisch, z.B. arithmetisch gemittelten Beleuchtungsbeiträge aller Sehstrahlen enthält. Dieser Visualisierungsbildpuffer wird in kontinuierlicher Weise dem Benutzer präsentiert und fortlaufend durch Berechnung weiterer Sehstrahlen im Hintergrund verfeinert. Wenn sich Visualisierungsparameter, wie z.B. die eingestellte Schattenstärke oder eine Position der virtuellen Kamera ändern, kann der Visualisierungsbildpuffer gelöscht werden und die Berechnung bzw. Simulation von Sehstrahlen neu gestartet werden. Da die Sehstrahlen und die Beleuchtungsbeiträge unabhängig voneinander berechnet werden können, lässt sich das erfindungsgemäße Visualisierungsverfahren gut parallelisieren und damit effektiv auf einer Vielkernarchitektur oder auf einer massiv parallel arbeitenden Graphikkarte ausführen.

Durch die Verwendung eines Monte-Carlo-Verfahrens zur Sehstrahl- bzw. Farbverfolgung kann die Erfindung beliebige Lichtpfade durch das Objektvolumen OV berücksichtigen und komplexe Beleuchtungseffekte und Kameramodelle nachbilden. Insbesondere können durch die Kombination der abhängig vom ersten Zufallsprozess gesteuerten Beleuchtungsverfahren, d.h. der Streuung in Richtung der selektierten intensiven Lichtquellen bzw. der Streuung in beliebige Richtungen des Umgebungsbildes die Vorteile beider Beleuchtungsverfahren kombiniert werden. Hierbei führen einerseits die Verwendung von Umgebungsbildern zu einer sehr natürlich wirkenden Visualisierung und andererseits das Forcieren der Streuung in Richtung intensiver Lichtquellen zu einer sehr realistischen Schattendarstellung. Die Stärke der Schattendarstellung kann zudem durch einen Benutzer auf einfache Weise variiert werden.

## Patentansprüche

1. Verfahren zur volumetrischen Visualisierung eines dreidimensionalen Objekts (OBJ) innerhalb eines Umgebungsbildes (LP1) als Beleuchtungsquelle, wobei
a) das Umgebungsbild (LP1) nach intensiven Lichtquellen durchsucht wird und mindestens eine intensive Lichtquelle (IL1, IL2) des Umgebungsbildes (LP1) abhängig von ihrer Intensität selektiert wird,
b) für ein jeweiliges Visualisierungspixel eine Vielzahl von Sehstrahlen (R1,...,R5) simuliert werden, wobei für einen jeweiligen Sehstrahl (R1,...,R5), der in ein Objektvolumen (OV) eindringt
i) eine Streuposition (SP1,...,SP7) bestimmt wird,
ii) eine Streurichtung ausgewählt wird, wobei abhängig von einem ersten Zufallsprozess entschieden wird, ob der Sehstrahl (R1,...,R5) in Richtung der mindestens einen selektierten intensiven Lichtquelle (IL1, IL2) oder in eine abhängig von einem zweiten Zufallsprozess auszuwählenden Streurichtung gestreut wird,
iii) der Sehstrahl (R1,...,R5) an der Streuposition (SP1,...,SP7) in die ausgewählte Streurichtung gestreut wird, und
iv) die Schritte i) bis iii) wiederholt werden, bis der Sehstrahl (R1,...,R5) im Objektvolumen (OV) absorbiert wird oder
aus dem Objektvolumen (OV) austritt und auf das Umgebungsbild (LP1) trifft, wobei abhängig von einem Intensitätswert des Umgebungsbilds (LP1) ein Beleuchtungsbeitrag des Sehstrahls (R1,...,R5) zum jeweiligen Visualisierungspixel ermittelt wird, und
c) ein Intensitätswert für das jeweilige Visualisierungspixel ermittelt wird, indem über die Beleuchtungsbeiträge der Vielzahl von Sehstrahlen (R1,...,R5) gemittelt wird.

2. Verfahren nach Anspruch 1, **dadurch gekennzeichnet,**
**dass** ein eine Schattenstärke betreffender Visualisierungsparameter eingelesen wird, und
**dass** der erste Zufallsprozess abhängig vom eingelesenen Visualisierungsparameter ausgeführt wird.

3. Verfahren nach einem der vorhergehenden Ansprüche, **dadurch gekennzeichnet, dass**
der erste Zufallsprozess abhängig von der Intensität der mindestens einen selektierten intensiven Lichtquelle (IL1, IL2) ausgeführt wird.

4. Verfahren nach einem der vorhergehenden Ansprüche, **dadurch gekennzeichnet, dass**
im Falle mehrerer selektierter intensiver Lichtquellen (IL1, IL2) die Auswahl der Streurichtung abhängig von der jeweiligen Intensität der selektierten intensiven Lichtquellen (IL1, IL2) erfolgt.

5. Verfahren nach einem der vorhergehenden Ansprüche, **dadurch gekennzeichnet, dass**
eine Liste von intensiven Lichtquellen des Umgebungsbildes (LP1) erstellt wird, wobei
für eine jeweilige intensive Lichtquelle (IL1, IL2) eine Richtung zu dieser intensiven Lichtquelle, ein dieser intensiven Lichtquelle zugeordneter Polygonzug auf dem Umgebungsbild (LP1) und/oder ein Intensitätswert gespeichert wird.

6. Verfahren nach einem der vorhergehenden Ansprüche, **dadurch gekennzeichnet,**
**dass** ein Auftreffpunkt des austretenden Sehstrahls (R1,...,R5) auf das Umgebungsbild (LP1) ermittelt wird, und dass der Beleuchtungsbeitrag des Sehstrahls (R1,...,R5) abhängig von einem Intensitätswert am Auftreffpunkt des Umgebungsbildes (LP1) ermittelt wird.

7. Verfahren nach einem der vorhergehenden Ansprüche, **dadurch gekennzeichnet,**
**dass** der Beleuchtungsbeitrag des Sehstrahls (R1,...,R5) beim Austritt aus dem Objektvolumen (OV) in Richtung der mindestens einen selektierten intensiven Lichtquelle (IL1, IL2) abhängig von deren Intensität ermittelt wird.

8. Verfahren nach einem der vorhergehenden Ansprüche, **dadurch gekennzeichnet,**
**dass** mehrere das Objektvolumen (OV) umgebende Umgebungsbilder (LP1, LP2, LP3) als Beleuchtungsquellen vorgesehen sind,
**dass** einem jeweiligen Sehstrahl (R1,...,R5) ein Streutyp zugeordnet wird,
**dass** abhängig vom Streutyp des austretenden Sehstrahls eines der Umgebungsbilder (LP1, LP2, LP3) selektiert wird, und dass der Beleuchtungsbeitrag des Sehstrahls (R1,...,R5) spezifisch anhand des selektierten Umgebungsbildes (LP1, LP2, LP3) ermittelt wird.

9. Verfahren nach Anspruch 8, **dadurch gekennzeichnet,**
**dass** aus einem ersten der Umgebungsbilder (LP1) mindestens ein zweites der Umgebungsbilder (LP2, LP3) durch eine für einen Streutyp spezifische Filterung erzeugt wird.

10. Verfahren nach einem der vorhergehenden Ansprüche, **dadurch gekennzeichnet,**
**dass** das Objekt (OBJ) durch Volumendaten repräsentiert wird, die eine Dichte des Objekts (OBJ) im Objektvolumen (OV) angeben,
**dass** die Streuposition (SP1,...,SP7) abhängig von der Dichte entlang des jeweiligen Sehstrahls (R1,...,R5) bestimmt wird, und
**dass** der Beleuchtungsbeitrag des jeweiligen Sehstrahls (R1,...,R5) durch die Dichte an der Streuposition (SP1,...,SP7) beeinflusst wird.

11. Verfahren nach Anspruch 10, **dadurch gekennzeichnet,**
**dass** eine Transferfunktion vorgesehen ist, die einen jeweiligen Wert der Dichte auf einen Helligkeits-, Farb-, Transparenz-, Intensitäts- und/oder Opazitätswert abbildet.

12. Verfahren nach einem der vorhergehenden Ansprüche, **dadurch gekennzeichnet,**
**dass** eine Anzahl der erfolgten Streuungen des Sehstrahls (R1,...,R5) ermittelt wird, und
**dass** die Absorption des Sehstrahls (R1,...,R5) im Objektvolumen (OV) abhängig von dieser Anzahl erfolgt.

13. Visualisierungsvorrichtung zur volumetrischen Visualisierung eines dreidimensionalen Objekts (OBJ) eingerichtet zum Ausführen eines Verfahrens nach einem der vorhergehenden Ansprüche.

14. Computerprogrammprodukt zur volumetrischen Visualisierung eines dreidimensionalen Objekts (OBJ) eingerichtet zum Ausführen eines Verfahrens nach einem der Ansprüche 1 bis 12.

15. Computerlesbares Speichermedium mit einem Computerprogrammprodukt nach Anspruch 14.

## Claims

1. Method for the volumetric visualization of a three-dimensional object (OBJ) within a light probe (LP1) as an illumination source, wherein
a) the light probe (LP1) is examined for intensive light sources and at least one intensive light source (IL1, IL2) of the light probe (LP1) is selected depending on the intensity thereof,
b) a multiplicity of rays (R1, ..., R5) are simulated for a respective visualization pixel, wherein, for a respective ray (R1, ..., R5) entering into an object volume (OV),
i) a scattering position (SP1, ..., SP7) is determined,
ii) a scattering direction is selected, with a decision being made depending on a first random process as to whether the ray (R1, ..., R5) is scattered in the direction of the at least one selected intensive light source (IL1, IL2) or in a scattering direction to be selected depending on a second random process,
iii) the ray (R1, ..., R5) is scattered at the scattering position (SP1, ..., SP7) in the selected scattering direction, and
iv) steps i) to iii) are repeated until the ray (R1, ..., R5) is absorbed in the object volume (OV) or
emerges from the object volume (OV) and impinges on the light probe (LP1), with an illumination contribution of the ray (R1, ..., R5) to the respective visualization pixel being ascertained depending on an intensity value of the light probe (LP1), and
c) an intensity value for the respective visualization pixel is ascertained by virtue of the illumination contribution of the multiplicity of rays (R1, ..., R5) being averaged.

2. Method according to Claim 1, **characterized in that** a visualization parameter relating to a shadow strength is read and **in that** the first random process is carried out depending on the read visualization parameter.

3. Method according to one of the preceding claims, **characterized in that**
the first random process is carried out depending on the intensity of the at least one selected intensive light source (IL1, IL2).

4. Method according to one of the preceding claims, **characterized in that**,
in the case of a plurality of selected intensive light sources (IL1, IL2), the selection of the scattering direction is carried out depending on the respective intensity of the selected intensive light sources (IL1, IL2).

5. Method according to one of the preceding claims, **characterized in that**
a list of intensive light sources of the light probe (LP1) is created, wherein
a direction to this intensive light source, a polygonal chain, assigned to this intensive light source, on the light probe (LP1) and/or an intensity value is stored for a respective intensive light source (IL1, IL2).

6. Method according to one of the preceding claims, **characterized**
**in that** a point of incidence of the emerging ray (R1, ..., R5) on the light probe (LP1) is ascertained, and
**in that** the illumination contribution of the ray (R1, ..., R5) is ascertained depending on an intensity value at the point of incidence of the light probe (LP1).

7. Method according to one of the preceding claims, **characterized**
**in that** the illumination contribution of the ray (R1, ..., R5) when emerging from the object volume (OV) in the direction of the at least one selected intensive light source (IL1, IL2) is ascertained depending on the intensity thereof.

8. Method according to one of the preceding claims, **characterized**
**in that** a plurality of light probes (LP1, LP2, LP3) surrounding the object volume (OV) are provided as illumination sources,
**in that** a scattering type is assigned to a respective ray (R1, ..., R5),
**in that** one of the light probes (LP1, LP2, LP3) is selected depending on the scattering type of the emerging ray, and
**in that** the illumination contribution of the ray (R1, ..., R5) is ascertained specifically on the basis of the selected light probe (LP1, LP2, LP3).

9. Method according to Claim 8, **characterized**
**in that** at least one second one of the light probes (LP2, LP3) is generated from a first one of the light probes (LP1) by filtering which is specific to a scattering type.

10. Method according to one of the preceding claims, **characterized**
**in that** the object (OBJ) is represented by volume data which specify a density of the object (OBJ) in the object volume (OV),
**in that** the scattering position (SP1, ..., SP7) is determined depending on the density along the respective ray (R1, ..., R5), and
**in that** the illumination contribution of the respective ray (R1, ..., R5) is influenced by the density of scattering position (SP1, ..., SP7).

11. Method according to Claim 10, **characterized in that** a transfer function is provided, which maps a respective value of the density to a brightness value, color value, transparency value, intensity value and/or opacity value.

12. Method according to one of the preceding claims, **characterized**
**in that** a number of carried out instances of scattering of the ray (R1, ..., R5) is ascertained, and
**in that** the absorption of the ray (R1, ..., R5) in the object volume (OV) is carried out depending on this number.

13. Visualization apparatus for the volumetric visualization of a three-dimensional object (OBJ), configured to carry out a method according to one of the preceding claims.

14. Computer program product for the volumetric visualization of a three-dimensional object (OBJ), configured to carry out a method according to one of Claims 1 to 12.

15. Computer-readable storage medium comprising a computer program product according to Claim 14.

## Revendications

1. Procédé de visualisation volumétrique d'un objet (OBJ) tridimensionnel au sein d'une image (LP1) environnante comme source d'éclairage, dans lequel
a) on recherche des sources lumineuses intenses dans l'image (LP1) environnante et on sélectionne au moins une source (IL1, IL2) lumineuse intense de l'image (LP1) environnante en fonction de son intensité,
b) pour un pixel respectif de visualisation, on simule une pluralité de rayons (R1, ..., R5) visuels, dans lequel, pour un rayon (R1, ..., R5) visuel respectif, qui pénètre dans un volume (OV) de l'objet
i) on détermine une position (SP1, ..., SP7) de dispersion,
ii) on sélectionne une direction de dispersion en décidant, en fonction d'une première opération aléatoire, si le rayon (R1, ..., R5) visuel est dispersé dans la direction de la au moins une source (IL1, IL2) lumineuse intense sélectionnée ou dans une direction de dispersion, à choisir en fonction d'une deuxième opération aléatoire,
iii) on disperse le rayon (R1, ..., R5) visuel, en la position (SP1, ..., SP7) de dispersion, dans la direction de dispersion sélectionnée et
iv) on répète les stades i) à iii) jusqu'à ce que le rayon (R1, ..., R5) visuel soit absorbé dans le volume (OV) de l'objet ou
sorte du volume (OV) de l'objet et atteigne l'image (LP1) environnante, dans lequel, en fonction d'une valeur d'intensité de l'image (LP1) environnante, on détermine une contribution à l'éclairage du rayon (R1, ..., R5) visuel pour le pixel respectif de visualisation et
c) on détermine une valeur d'intensité du pixel respectif de visualisation en faisant la moyenne des contributions à l'éclairage de la pluralité de rayons (R1, ..., R5) visuels.

2. Procédé suivant la revendication 1, **caractérisé en ce que** l'on lit un paramètre de visualisation concernant une intensité d'ombre et
**en ce que** l'on réalise la première opération aléatoire en fonction du paramètre de visualisation qui a été lu.

3. Procédé suivant l'une des revendications précédentes, **caractérisé en ce que**
l'on effectue la première opération aléatoire en fonction de l'intensité de la au moins une source (IL1, IL2) intense sélectionnée.

4. Procédé suivant l'une des revendications précédentes, **caractérisé en ce que**,
s'il y a plusieurs sources (IL1, IL2) lumineuses intenses sélectionnées, le choix de la direction de dispersion s'effectue en fonction de l'intensité respective des sources (IL1, IL2) lumineuses intenses sélectionnées.

5. Procédé suivant l'une des revendications précédentes, **caractérisé en ce que**
l'on dresse une liste de sources lumineuses intenses de l'image (LP1) environnante, dans lequel,
pour une source (IL1, IL2) lumineuse intense respective, on mémorise une direction allant à cette source lumineuse intense, un tracé polygonal associé à cette source lumineuse intense sur l'image (LP1) environnante et/ou une valeur d'intensité.

6. Procédé suivant l'une des revendications précédentes, **caractérisé**
**en ce que** l'on détermine, sur l'image (LP1) environnante, un point d'incidence du rayon (R1, ..., R5) visuel sortant et en ce que l'on détermine la contribution à l'éclairage du rayon (R1, ..., R5) visuel en fonction d'une valeur d'intensité au point d'incidence sur l'image (LP1) environnante.

7. Procédé suivant l'une des revendications précédentes, **caractérisé**
**en ce que** l'on détermine la contribution à l'éclairage du rayon (R1, ..., R5) visuel à la sortie du volume (OV) de l'objet dans la direction de la au moins une source (IL1, IL2) intense sélectionnée en fonction de son intensité.

8. Procédé suivant l'une des revendications précédentes, **caractérisé**
**en ce que** l'on prévoit comme source d'éclairage plusieurs images (LP1, LP2, LP3) environnantes entourant le volume (OV) de l'objet,
**en ce que** l'on affecte un type de dispersion à un rayon (R1, ..., R5) visuel respectif,
**en ce que** l'on sélectionne l'une des images (LP1, LP2, LP3) environnante en fonction du type de dispersion du rayon visuel sortant et
**en ce que** l'on détermine la contribution à l'éclairage du rayon (R1, ..., R5) visuel spécifiquement à l'aide de l'image (LP1, LP2, LP3) environnante sélectionnée.

9. Procédé suivant la revendication 8, **caractérisé**
**en ce que** l'on produit, à partir d'une première des images (LP1) environnantes, au moins une deuxième des images (LP2, LP3) environnantes, par un filtrage spécifique à un type de dispersion.

10. Procédé suivant l'une des revendications précédentes, **caractérisé**
**en ce que** l'on représente l'objet (OBJ) par des données de volume, qui indiquent une densité de l'objet (OBJ) dans le volume (OV) de l'objet,
**en ce que** l'on détermine la position (SP1, ..., SP7) de dispersion en fonction de la densité le long du rayon (R1, ..., R5) visuel respectif et
**en ce que** l'on influe sur la contribution à l'éclairage du rayon (R1, ..., R5) visuel respectif par la densité en la position (SP1, ..., SP7) de dispersion.

11. Procédé suivant la revendication 10, **caractérisé**
**en ce que** l'on prévoit une fonction de transfert, qui représente une valeur respective de la densité en une valeur de luminosité, de couleur, de transparence, d'intensité et/ou d'opacité.

12. Procédé suivant l'une des revendications précédentes, **caractérisé**
**en ce que** l'on détermine un certain nombre des dispersions effectuées du rayon (R1, ..., R5) visuel et
**en ce que** l'absorption du rayon (R1, ..., R5) visuel, dans le volume (OV) de l'objet, s'effectue en fonction de ce nombre.

13. Dispositif de visualisation pour la visualisation volumétrique d'un objet (OBJ) tridimensionnel conçu pour exécuter un procédé suivant l'une des revendications précédentes.

14. Produit de programme d'ordinateur pour la visualisation volumétrique d'un objet (OBJ) en trois dimensions conçu pour effectuer un procédé suivant l'une des revendications 1 à 12.

15. Support de mémoire déchiffrable par un ordinateur, ayant un produit de programme d'ordinateur suivant la revendication 14.
